# EUROPEAN PATENT SPECIFICATION

(11) **EP 4 320 357 B1**
(45) Date of publication and mention of the grant of the patent: **11.09.2024**
(21) Application number: 22728865.1
(22) Date of filing: 12.05.2022
(51) Int. Cl.: F15B 21/0427, F15B 21/04, F03D 7/02

(54) **METHOD OF OPERATING A HYDRAULIC SYSTEM FROM AN OFF-STATE IN A COLD ENVIRONMENT**
VERFAHREN ZUM BETRIEB EINES HYDRAULISCHEN SYSTEMS AUS EINEM AUS-ZUSTAND IN EINER KALTEN UMGEBUNG
PROCÉDÉ DE FONCTIONNEMENT D'UN SYSTÈME HYDRAULIQUE À PARTIR D'UN ÉTAT ÉTEINT DANS UN ENVIRONNEMENT À FROID

(30) Priority: 11.06.2021 EP 21179015
(43) Date of publication of application: 14.02.2024
(73) Proprietor: Siemens Gamesa Renewable Energy A/S, 7330 Brande (DK)
(72) Inventor: SHEIDER, Jonathan, Lake City, FL 32024 (US)
(74) Representative: SGRE-Association
(86) International application number: PCT/EP2022/062924
(87) International publication number: WO 2022/258298

(56) References cited:
- EP-A1- 3 315 769
- US-A1- 2019 338 793
- US-A1- 2020 123 739

## Description

### Background

Wind turbines may be installed in locations that experience prolonged cold weather conditions, for example temperatures lower than minus 30° C. Such cold temperatures can present a problem particularly to hydraulic systems such as the rotor blade pitch systems. This is because the viscosity of the hydraulic fluid will increase as the temperature decreases, raising the electric and mechanical load on the pump and leading to unfavourably large pressure drops in the system.

Hydraulic fluid can be classified according to its ISO standard VG (International Standards Organization Viscosity Grade) number, which is a measure of the fluid viscosity (its resistance to flow) at a common operating temperature, e.g. 40° C, and is expressed in centistokes (cSt), and according to its viscosity index. An ISO VG 32 hydraulic fluid is widely used and is relatively economical, making it a preferred choice in systems such as wind turbines that require large quantities of hydraulic fluid.

As long as a wind turbine is operational and its hydraulic systems are in regular use, fluid temperature and viscosity can be maintained within acceptable levels. However, the viscosity of such a fluid can be unfavourably high in very cold conditions, and can place an unfavourably high load on the pump, leading to damage or failure. Starting the hydraulic system under cold conditions during the plant's lifetime can ultimately compromise the hydraulic system response performance, leading to slower completion of an emergency shut-down. This in turn can lead to higher loads on structural components of the plant, for example unfavourably high wind loading on the rotor blades, tower of a wind turbine as a result of a sluggish shutdown procedure. Without any means of decreasing the viscosity of the hydraulic fluid, control of such a plant would necessitate waiting for an increase in ambient temperature, but such delays prolong the shutdown state. Delays can result in loss of earnings in plants that otherwise generate export power.

For this reason, the hydraulic system of a plant for use in a cold environment is generally equipped with some means of maintaining satisfactory parameters of the hydraulic fluid. The hydraulic systems can be run with a fluid specifically developed for cold weather environments, i.e. a fluid with favourable viscosity characteristics at low temperatures such as Shell Tellus S4 VX 32. The actual composition of such a hydraulic fluid determines whether the fluid is suitable for use in systems designed for "standard weather" conditions, or whether it will exhibit a satisfactorily low viscosity even in extreme cold weather conditions. However, a dedicated fluid with a very high viscosity index, for example in the order of 250 or higher, will remain relatively fluid at extreme low temperatures but is significantly more expensive than a "standard weather" fluid with a viscosity index in the order of 150 - 160. More importantly, if such a "cold weather" oil is used, it may be necessary to use seals made of a material that will not be affected by exposure to the fluid, for example shrinkage, leading to leaks in the system.

In another approach, a hydraulic system uses the more economical hydraulic fluid rated for warmer temperatures, and deploys a heater immersed in the hydraulic fluid contained in the system's tank. Examples of this approach are given by EP3315769A1, which describes a wind turbine with various heaters deployed to heat the hydraulic fluid of a hydraulic pitch system; US2019338793A1, which proposes using a heat exchanger to raise the temperature of the hydraulic fluid of an aircraft hydraulic systems; and US2020123739A1, which considers using an auxiliary heater to preheat the hydraulic fluid of a hydraulic system. Such a heater can be electrically powered, for example from the wind turbine's auxiliary power supply. Before re-starting the wind turbine after shutdown in cold conditions, the oil in the tank can be heated to the necessary minimum temperature. However, such heaters cannot raise the temperature of the fluid in the remainder of the hydraulic system, i.e. the significant quantity of fluid in the pressure lines and return lines, and as a result the pump may be overloaded by the high viscosity of the cold fluid when the hydraulic system resumes operation in cold conditions. Furthermore, the need to install a heater and connect it to the auxiliary power supply adds to the overall costs. This approach is not entirely reliable, because the downtime duration cannot always be known in advance and it may be that there is insufficient auxiliary power available for heating the fluid prior to restarting and for supplying the pump with sufficient current to move the viscous cold fluid through the fluid lines.

It is therefore an object of the invention to provide a solution to the problems outlined above.

This object is achieved by the method of claim 1 of operating a hydraulic system from an off-state in a cold environment; and by the hydraulic system of claim 6.

### Description

In the following, a hydraulic system comprises a plurality of hydraulic cylinder arrangements connected by fluid lines to an accumulator arrangement and a tank or reservoir, as well as a pump that conveys fluid through the fluid lines. The hydraulic system further comprises a plurality of electronically operated valves arranged in the fluid lines. Each such valve can be actuated (opened, partially opened, closed) by applying a suitable control signal. By actuating a group of valves in a specific manner, hydraulic fluid can be directed along a specific path through the fluid lines, as will be known to the skilled person. The hydraulic system may of course comprise any number of other components such as hoses, pressure sensors, isolation valves, overflow valves, etc. which are not relevant to the invention and which need not be discussed in any detail herein.

The hydraulic system is to be incorporated in a plant such as a turbine or other machinery. The inventive method is applied to achieve a return to operation of the hydraulic system from an off-state in a cold environment, whereby the expression "cold environment" shall be understood to mean that the ambient temperature is at or near the lowest temperature at which the plant can be restarted. It shall be understood that in the off-state of the plant, the fluid of the hydraulic system is also at the low ambient temperature, i.e. there is essentially no residual heat in the hydraulic system.

According to the invention, the method comprises two main stages. In a first stage, a plurality of electronically operated valves are selectively actuated to define a fluid path in which hydraulic fluid is conveyed from the tank through a bypass valve and directly back to the tank until the temperature of the fluid in the tank has reached a first interim level. In a subsequent second stage, the plurality of electronically operated valves are selectively actuated to cycle fluid from the tank through the pressure lines of the hydraulic system and back to the tank until the temperature of the fluid has reached a desired operating level. The expression "valves are selectively actuated" shall be understood to mean that certain valves are opened and others are closed in order to define the desired fluid path.

In the context of the invention, the bypass valve is an unloading valve. An unloading valve is generally incorporated in a hydraulic system in order to decrease wear on the pump, reduce energy consumption, and reduce waste pressure losses.

The inventive method may therefore be regarded as a method of raising the temperature of the fluid in a hydraulic system prior to resuming operation in a cold environment, without the use of any heating devices, and solely from the heat dissipated through friction and losses as the fluid travels along the designated paths through the system. Effectively, the electrical energy used to operate the pump is converted to thermal energy of the oil in the fluid lines. The invention is based on the insight that an otherwise troublesome property of the hydraulic fluid - i.e. its tendency to become warmer as it passes through the fluid lines - can be used to good advantage during cold startup.

It shall be understood that the hydraulic circuit described herein does not deploy an additional heating device, e.g. an immersion heater installed in the tank as required by the prior art systems. The inventive method instead provides a favourably simple and economical way of raising the temperature of the hydraulic fluid without the need of a dedicated heater. The inventive method allows heating of hydraulic components such as hoses, manifolds, and accumulators from their initial cold state and helps bring all these elements to an ideal operating temperature. Besides not having to install an immersion heater in the fluid tank, another advantage of the inventive method is that components of the hydraulic system are not overloaded (mechanically or electrically), and the system can safely but quickly achieve the desired running temperature and system pressure. In this way, the method provides a way of operating the hydraulic system so that it gradually reaches its working temperature, without the need of any additional heating devices and without having to use expensive cold-weather fluid.

The difference in price between a "standard temperature oil" with a lower viscosity index (VI) and a dedicated "cold weather oil" with a higher viscosity index may be in the range of several Euros per litre. A plant such as a wind turbine may require about 400 litres of hydraulic fluid, and generally requires at least one complete oil exchange during its lifetime. Implementation of the inventive method can therefore give savings in the order of several thousand Euro per wind turbine.

According to the invention, the hydraulic system comprises a controller that is configured to execute the method steps described above in order to raise the temperature of the hydraulic fluid to a desired operating level, so that the plant in which the hydraulic system is installed can resume operation in a cold environment after having been in standstill.

According to the invention, a computer program product comprises a computer program that is directly loadable into a memory of the controller of the inventive hydraulic system and which comprises program elements for performing steps of the inventive method when the computer program is executed by the controller. The hydraulic system controller may in turn be controlled by a higher-order instance such as a plant controller.

Particularly advantageous embodiments and features of the invention are given by the dependent claims, as revealed in the following description. Features of different claim categories may be combined as appropriate to give further embodiments not described herein.

The inventive method could be used to restart a hydraulic system in any kind of machinery or plant that may be operated also in cold environments. For example, the hydraulic system could be deployed in a gas turbine generator, a steam turbine generator, mobile farm equipment, an aircraft, a marine vessel, etc. In the following, without restricting the invention in any way, it may be assumed that the plant in which the hydraulic system is installed is a wind turbine, and that the hydraulic cylinders are pitch cylinders of a rotor blade pitching system. The hydraulic fluid used in the pitch system may be assumed to be an economical low-VI fluid such as ISO VG 32 hydraulic oil or an equivalent. The expressions "hydraulic oil" and "hydraulic fluid" shall be understood to be synonyms and may be used interchangeably herein.

In the context of the invention, a hydraulic cylinder arrangement comprises one or more hydraulic cylinders, and a hydraulic cylinder has a dedicated proportional valve that regulates the quantity of fluid into and out of the piston-side and rod-side chambers.

In a preferred embodiment of the invention, the method comprises an initial stage which is carried out prior to the first stage, and in which the plurality of electronically operated valves are controlled to drain system pressure from an accumulator arrangement. An accumulator is a pressure storage reservoir and serves to improve the performance of the hydraulic system. An accumulator arrangement may comprise several accumulators. In the initial stage, valves are opened in a controlled manner to allow the cold oil to pass from the accumulators and the return lines to the tank. Once this step is complete, the method continues with the first stage.

The first method stage may be referred to as "low pressure heating in the bypass system", since the temperature of the fluid in the bypass circuit is gradually raised. The bypass circuit comprises only the bypass valve and the fluid lines on either side of the bypass valve, linking it to the tank. The invention exploits the possibilities offered by the usual short bypass fluid path or "bypass circuit", since the bypass valve of a hydraulic circuit may often be mounted in close proximity to the tank, for example on a manifold placed on the lid of the tank. This first method stage may also be regarded as a "low pressure stage" that optimally exploits the limited possibilities for safe operation with a high-viscosity cold fluid.

In this first method stage, the pressure drop or pressure differential across the fluid lines of the short bypass circuit has the effect of increasing the temperature of the oil being pumped through the bypass valve. This method stage persists until the temperature of the fluid in the tank has reached the first interim level, i.e. a temperature slightly higher than the cold ambient temperature.

The second method stage may be referred to as "low pressure - medium pressure heating", because the larger pressure differential across the pressure lines of the hydraulic system has the effect of further raising the temperature of the fluid passing through them.

As indicated above, a hydraulic system such as a wind turbine rotor blade pitch system comprises a plurality of hydraulic cylinder arrangements. According to the invention, the second stage comprises a first "distributed" step in which proportional valves of two or more hydraulic cylinder arrangements are simultaneously controlled (along with other relevant valves) to cycle fluid from the tank through the corresponding pressure lines and back to the tank until the temperature of the fluid has reached a second interim level. The second stage also comprises a further "concentrated" step in which proportional valve(s) of only one hydraulic cylinder arrangement are controlled to cycle fluid from the tank through the pressure lines of that hydraulic cylinder arrangement and back to the tank until the temperature of the fluid has reached the desired operating level or "running temperature". In the case where a hydraulic cylinder arrangement comprises only one hydraulic cylinder, fluid flow is restricted to the pressure lines of a single hydraulic cylinder, i.e. the hydraulic fluid is forced through only a fraction of the total number of possible lines. By restricting the fluid flow to the pressure lines of a single hydraulic cylinder, a favourably high pressure differential is developed, which has the result of raising the oil temperature more rapidly. This second step persists until the desired running temperature is reached, i.e. an optimal temperature at which the hydraulic system can resume full operation.

In a preferred embodiment of the invention, the hydraulic system is equipped with one or more temperature sensors arranged to measure the temperature of the hydraulic oil at any relevant location. For example, a temperature sensor may be arranged to measure the temperature of the oil in the tank. A further temperature sensor may be arranged to measure the temperature of the oil in a pressure line. Temperature sensors may report measurements to the controller of the hydraulic system in any suitable manner.

In a further preferred embodiment of the invention, the method comprises a concluding stage in which relevant valves are actuated to fill the accumulator arrangement with the warmed hydraulic oil. The system is now ready to resume normal operation, for example to resume pitching the wind turbine rotor blades to extract energy from the wind.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows an exemplary flowchart of the inventive method;
Figure 2 shows exemplary pressure and temperature curves during execution of the inventive method;
Figures 3 - 5 illustrate stages of the inventive method being performed for a hydraulic system;
Figure 6 shows an exemplary control configuration.

In the diagrams, like numbers refer to like objects throughout. Objects in the diagrams are not necessarily drawn to scale.

The invention is described in the following for an exemplary installation in which the plant is a wind turbine, and the hydraulic system is used to actuate pitch cylinders of a pitch system. Of course, the principle of the invention applies to cold start of a hydraulic system of any type of plant.

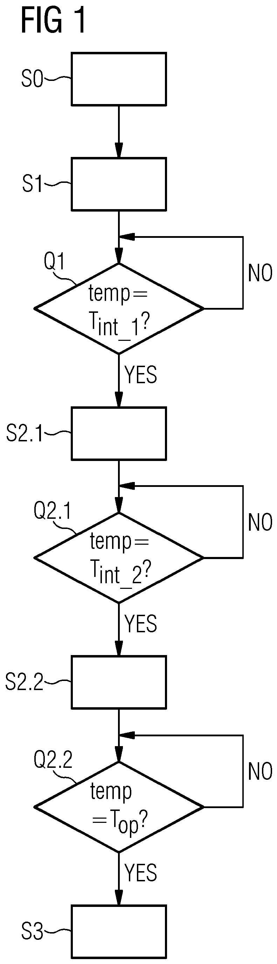

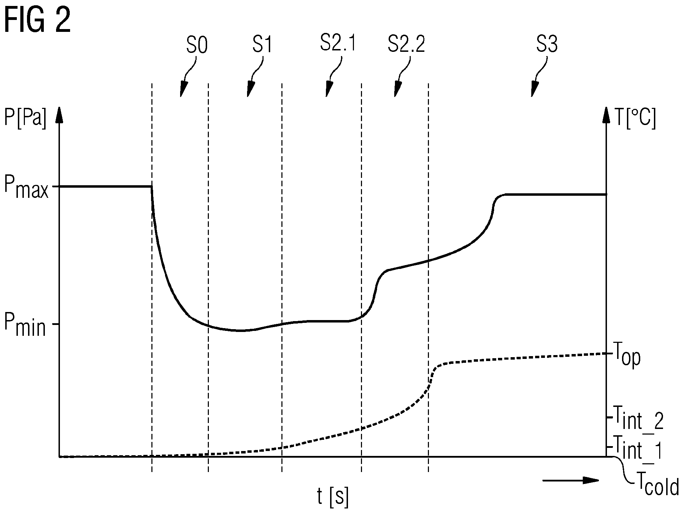

Figure 1 is a flowchart of an exemplary sequence of steps when carrying out the inventive method, and Figure 2 shows pressure and temperature curves that develop during execution of the inventive method. In an initial stage S0, the rotor blades are pitched to feather, i.e. out of the wind. Selected valves of the hydraulic system 1 are actuated to drain system pressure from the accumulator arrangement 11. This step serves to safely drain system pressure from an initial level Pₘₐₓ to a minimum level Pₘᵢₙ while the wind turbine is in stop position or stand-still. In this step S0, valves are opened in a controlled manner in order to drain system pressure that may be present in the accumulators, and ensures that cold oil is cycled out of the accumulators as well as out of the return lines. The temperature of the oil at this stage is the minimum rated re-start temperature T_{cold} of the plant, for example a wind energy plant. During a shutdown state of the plant, the temperature can have dropped to a level below this minimum rated re-start temperature T_{cold}. The plant may only be restarted when the temperature has risen to this minimum rated re-start temperature T_{cold}. It may be assumed that all residual heat has dissipated, so all parts of the hydraulic system are at this low temperature T_{cold}.

In a subsequent stage S1, valves are controlled to cycle fluid from the tank 13 through the bypass valve and directly back to the tank. This stage persists until the temperature of the fluid in the tank has reached a first interim level T_{int_1} as indicated in query Q1. In stage S1, the oil in the tank is gradually heated only by the effect of the pressure differential across the bypass circuit and the attendant losses. This step can be carried out for an unspecified duration, i.e. until the cumulative heating effect has raised the temperature of the oil to a level that will facilitate the next step. The temperature is monitored continuously or at suitable intervals. As long as the temperature is still too low ("NO"), this state persists, and proceeds to the next state S2.1 when the temperature has been raised to the first interim level T_{int_1} ("YES"). An increase of only a few degrees Celsius above the initial temperature T_{cold} may be sufficient. Once this step is complete, the bypass valve is closed again.

In a subsequent stage S2.1, the bypass and proportional valves are controlled to cycle cold oil through the pressure lines, i.e. by cycling oil across the pitch system by actuating all of the proportional valves (one for each rotor blade of the wind turbine) and by selectively actuating the bypass valve. In this stage S2.1, cold oil is cycled out of the fluid lines of the pitch system and returned to the tank, resulting in a large pressure differential which accelerates the rate of heating of the oil. This step persists until the temperature of the fluid in the tank has reached a second interim level T_{int_2} as indicated in query Q2.1. The second interim temperature T_{int_2} is higher than the first interim temperature T_{int_1} but still lower than the final desired operating temperature. Pressure in the system is still quite low, only marginally higher than the minimum pressure Pₘᵢₙ.

In a subsequent stage S2.2, only one of the proportional valves is opened, resulting in an even larger pressure differential, which in turn further accelerates the rate of heating of the oil. This step persists until the running oil temperature Tₒₚ is reached as indicated in query Q2.2. The system pressure has reached a higher level P_{mid}.

In a final stage S3, after the running oil temperature Tₒₚ has been reached, the system is charged to the maximum working pressure by filling the accumulators 11 with the warmed oil, and the plant - in this case the wind turbine - can resume operation. Once the wind turbine pitch controller issues a pitch reference to pitch the rotor blades to a working position, the rod-side chamber 102 of each cylinder 10 will be filled by warmed oil, and any remaining cold oil in the piston-side chamber 101 of each cylinder 10 will be returned to the tank 13 where it can mix with the previously warmed oil. At this point, the system pressure has reached its maximum level Pₘₐₓ, and all components of the hydraulic system 1 are sufficiently warmed and ready for normal use.

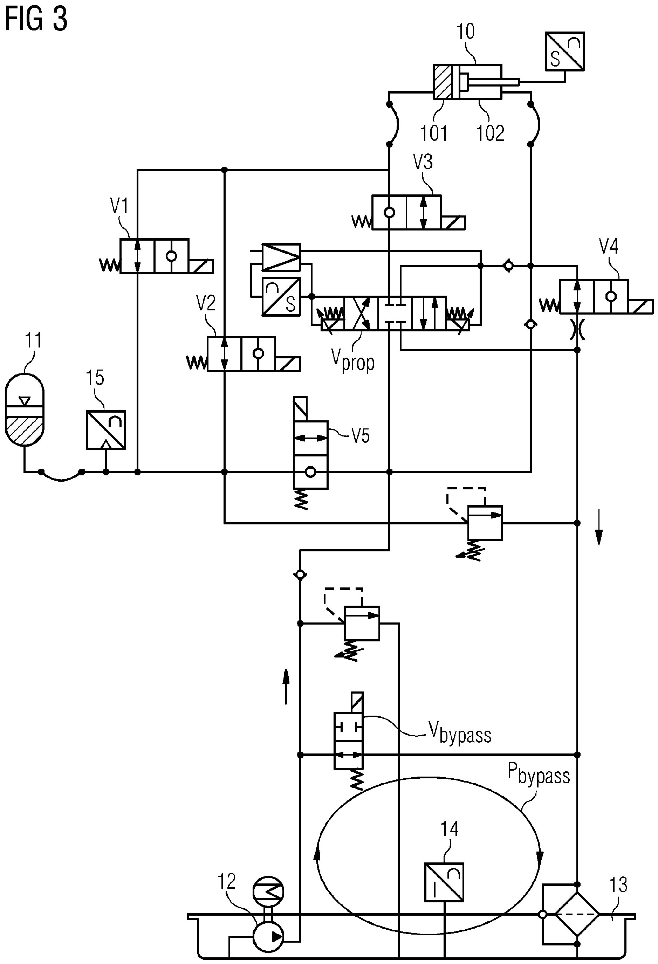

Figures 3 - 5 show how an exemplary hydraulic system 1 as might be deployed to control the pitch cylinders 10 of wind turbine rotor blades. The diagram is greatly simplified to only show elements of relevance to the invention, and it shall be understood that the hydraulic system may encompass other components and further hydraulic circuits that are not shown here.

For clarity, Figure 3 shows only one hydraulic cylinder 10, but it shall be understood that each rotor blade has its own pitching arrangement, i.e. each rotor blade may be pitched by a hydraulic cylinder arrangement comprising one or more hydraulic cylinders 10. The hydraulic system 1 comprises various fluid lines roughly divided into pressure lines (which convey fluid from a tank 13 and/or accumulator arrangement 11 to a chamber 101, 102 of the cylinder 10) and return lines (which convey fluid from a chamber 101, 102 of the cylinder 10 to the tank 13). The diagrams also show a proportional directional valve Vₚᵣₒₚ, an unloading (bypass) valve V_{bypass} and various other valves V1 - V4. Each of these valves Vₚᵣₒₚ, V_{bypass}, V1 - V4 can be actuated by applying a suitable control signal, for example a signal to actuate the solenoid of a solenoid-controlled valve. For the sake of clarity, such control signals are not shown in the diagram. A hydraulic system of this type may of course include many other valves and components, as will be known to the skilled person, and only aspects relevant to the invention are discussed here.

The diagram shows the tank 13 and various fluid lines, and indicates a bypass path P_{bypass}. The bypass path P_{bypass} comprises the tank-side bypass valve V_{bypass} and "short" fluid lines on either side, i.e. low-pressure-drop lines, so that fluid can be pumped from the tank 13 through the short fluid line to the bypass valve V_{bypass} and directly back through the other short fluid line to the tank 13 as indicated. In the inventive hydraulic system 1, the pump 12 is configured to handle the high starting viscosity of a "standard weather oil" (e.g. an ISO VG 32 oil or equivalent) at the minimum plant operating temperature, which can be -30° Celsius or lower for a wind turbine.

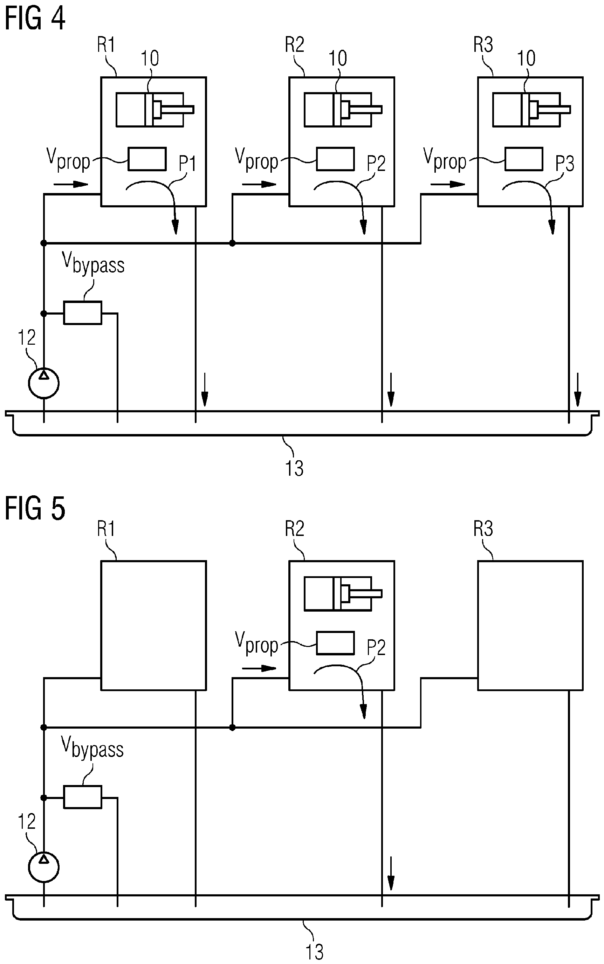

Figure 4 illustrates fluid flow in step S2.1 of the inventive method. The system of Figure 3 is simplified further to indicate hydraulic circuits of three rotor blade pitch systems R1, R2, R3, bypass valve V_{bypass}, pump 12 and tank 13. Each pitch system R1, R2, R3 is represented for the sake of simplicity by a hydraulic cylinder 10 and a proportional valve Vₚᵣₒₚ, and shall be understood to comprise the other elements as described in Figure 3 above.

After heating the oil in the tank 13 by cycling it through the bypass path P_{bypass} as shown in Figure 3, the bypass valve is controlled to redirect flow to the pressure lines of the pitch systems R1, R2, R3. In this stage, oil is cycled through the pressure lines of all pitch systems R1, R2, R3 indicated by three paths P1, P2, P3, resulting in a further rise in temperature on account of the increased pressure differential. Each path P1, P2, P3 includes the corresponding proportional valve Vₚᵣₒₚ. In a similar manner, Figure 5 illustrates fluid flow in step S2.2: here, fluid flow is restricted to the proportional valve Vₚᵣₒₚ of a single pitch system (R2 in this example), with the largest possible pressure differential over the single path P2, resulting in a favourably rapid increase in oil temperature.

Effectively, the electrical energy used to drive the pump 12 is converted to thermal energy of the oil in the fluid lines. Because of the overall gradual rise in fluid temperature and decrease in fluid viscosity achieved by the successive heating stages S1, S2.1, S2.2, none of the components of the hydraulic system 1 are subject to excessive load (mechanical or electrical), so that the system can safely but quickly achieve the desired running temperature Tₒₚ and system pressure Pₘₐₓ.

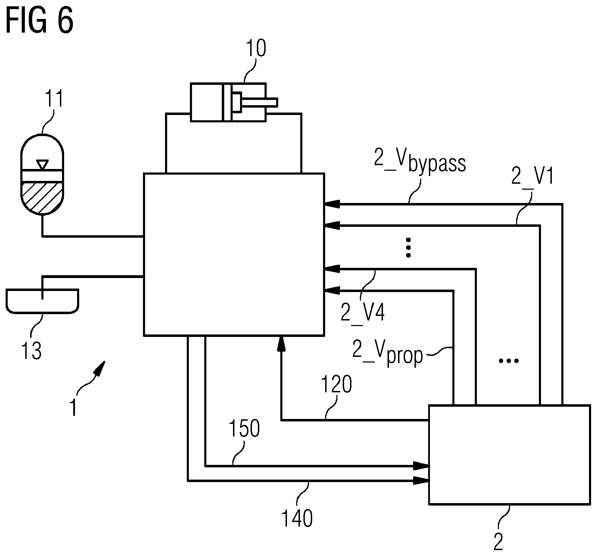

Figure 6 shows a very simplified block diagram of plant control as applied to a wind turbine hydraulic system 1. The pitch systems of the wind turbine rotor blades are collectively represented by a hydraulic cylinder 10 for the sake of simplicity. Here, a controller 2 is configured to issue control signals to components of the hydraulic system 1 on the basis of feedback from the system 1. In this exemplary embodiment, the controller 2 receives (amongst others) temperature readings 140 from a temperature sensor 14, and pressure measurement readings 150 from one or more pressure sensors, which may be positioned at suitable locations in the hydraulic system as will be known to the skilled person. For example, a pressure sensor 15 can be arranged as shown in Figure 3 to measure accumulator bank pressure during the initial draining step S0 prior to the inventive heating sequence, and also during the final pressurization step S3 prior to resuming normal operation.

The controller 2 is configured to issue a control signal 120 to actuate the pump 12, and also to issue control signals 2_Vₚᵣₒₚ, 2_V_{bypass}, 2_V1 - 2_V4 to actuate the valves Vₚᵣₒₚ, V_{bypass}, V1 - V4 as appropriate. The controller 2 may be assumed to comprise suitable hardware that is configured to run software modules for carrying out the inventive method, i.e. to carry out the steps explained in Figures 3 - 5 above. The elements of the hydraulic system 1 are actuated and controlled as described above until the temperature of the fluid in the hydraulic system has reached its optimal working temperature Tₒₚ. As the skilled person will be aware, such a controller can be implemented as part of the already existing plant controller, for example as part of a wind turbine controller, which can be realised locally or remotely. In a remote control setup, the feedback signals and control signals may be transmitted over any suitable network. Although the present invention has been disclosed in the form of preferred embodiments and variations thereon, it will be understood that numerous additional modifications and variations could be made thereto without departing from the scope of the invention as defined by the claims. For the sake of clarity, it is to be understood that the use of "a" or "an" throughout this application does not exclude a plurality, and "comprising" does not exclude other steps or elements.

## Claims

1. A method of operating a hydraulic system (1) of a plant to resume operation from a minimum operating temperature (T_{cold}) of the plant, the hydraulic system (1) comprising a plurality of hydraulic cylinder arrangements (10) connected by fluid lines to a tank (13) and a pump (12) that conveys fluid through the fluid lines and a plurality of electronically operated valves (Vₚᵣₒₚ, V_{bypass}, V1 - V4) arranged in the fluid lines, the fluid lines being thereby divided into pressure lines and return lines, the method comprising
- a first stage (S1) in which the plurality of electronically operated valves (Vₚᵣₒₚ, V_{bypass}, V1 - V4) are controlled to cycle fluid from the tank (13) through a bypass valve (V_{bypass}) of the plurality of electronically operated valves and directly back to the tank (13) until the temperature of the fluid in the tank (13) has reached a first interim level (T_{int_1}); and
- a second stage (S2) comprising a first step (S2.1) in which the plurality of electronically operated valves (Vₚᵣₒₚ, V_{bypass}, V1
- V4) are controlled to cycle fluid from the tank (13) through the corresponding pressure lines of two or more hydraulic cylinder arrangements (10) of the hydraulic system (1) and back to the tank (13) until the temperature of the fluid has reached a second interim level (T_{int_2}), and a second step (S2.2) in which the plurality of electronically operated valves (Vₚᵣₒₚ, V_{bypass}, V1
- V4) are controlled to cycle fluid from the tank (13) through the corresponding pressure lines of a single hydraulic cylinder arrangement (10) of the hydraulic system (1) and back to the tank (13) until the temperature of the fluid has reached a desired operating level (Tₒₚ).

2. A method according to claim 1, comprising an initial stage (S0) in which the plurality of electronically operated valves (Vₚᵣₒₚ, V_{bypass}, V1 - V4) are controlled to drain system pressure from an accumulator arrangement (11).

3. A method according to claim 2, comprising a concluding stage (S3) in which the plurality of electronically operated valves (Vₚᵣₒₚ, V_{bypass}, V1 - V4) are controlled to fill the accumulator arrangement (11) with heated fluid.

4. A method according to any of the preceding claims, wherein the plurality of electronically operated valves (Vₚᵣₒₚ , V_{bypass} , V1 - V4) comprises proportional valves (Vₚᵣₒₚ) dedicated to all hydraulic cylinder arrangements (10), wherein the dedicated proportional valves (Vₚᵣₒₚ) of all hydraulic cylinder arrangements (10) are controlled during the first step (S2.1) of the second stage (S2) to cycle fluid from the tank (13) through the corresponding pressure lines and back to the tank (13) until the temperature of the fluid has reached the second interim level (T_{int_2}).

5. A method according to claim 4, wherein, during the second step (S2.2) of the second stage (S2), the dedicated proportional valve (Vₚᵣₒₚ) of a single hydraulic cylinder arrangement (10) is controlled to cycle fluid from the tank (13) through the corresponding pressure line and back to the tank (13) until the temperature of the fluid has reached the desired operating level (Tₒₙ).

6. A hydraulic system (1) comprising at least
- a plurality of hydraulic cylinder arrangements (10), an accumulator arrangement (11) and a tank (13) connected by fluid lines, and a pump (12) arranged to convey fluid through the fluid lines;
- a plurality of electronically operated valves (Vₚᵣₒₚ, V_{bypass}, V1 - V4) arranged in the fluid lines, the plurality of electronically operated valves (Vₚᵣₒₚ , V_{bypass} , V1 - V4) comprising a bypass valve (V_{bypass}) ; and
- a controller configured to execute the method of claims 1 to 5 to raise the temperature of the fluid from a minimum operating temperature (T_{cold}) of a plant to the desired operating temperature (Tₒₚ) of the plant.

7. A hydraulic system according to claim 6, comprising a bypass circuit (1B), which bypass circuit (P_{bypass}) comprises the bypass valve (V_{bypass}), a first fluid line between the tank (13) and the bypass valve (V_{bypass}), and a second fluid line between the bypass valve (V_{bypass}) and the tank (13).

8. A hydraulic system according to claim 6 or claim 7, comprising a temperature sensor arrangement (14) configured to measure the fluid temperature in the tank (13).

9. A hydraulic system according to any of claims 6 to 8, without any additional heating apparatus in the tank (13).

10. A wind turbine comprising a plurality of rotor blades and a rotor blade pitching arrangement, which pitching arrangement comprises a hydraulic system (1) according to any of claims 6 to 9.

11. A wind turbine according to claim 10, wherein each of the plurality of hydraulic cylinder arrangements (10) comprises one or more hydraulic cylinders (10) which is arranged to effect an angular rotation of a respective rotor blade about its longitudinal axis.

12. A wind turbine according to claim 10 or claim 11, with a minimum operating temperature (T_{cold}) in the region of -30° C.

13. A wind turbine according to claim 12, wherein the hydraulic fluid of the hydraulic system (1) has a viscosity index of at most 160.

14. A wind turbine according to claim 13, wherein the pump (12) is constructed according to the viscosity of the hydraulic fluid at the minimum operating temperature (T_{cold}) of the wind turbine.

15. A computer program product comprising a computer program that is directly loadable into a memory of the controller of a hydraulic system according to any of claims 6 to 9 and which comprises program elements for performing steps of the method according to any of claims 1 to 5 when the computer program is executed by the controller.

## Patentansprüche

1. Verfahren zum Betreiben eines Hydrauliksystems (1) einer Anlage zum Wiederaufnehmen eines Betriebs von einer Mindestbetriebstemperatur (Tₖₐₗₜ) der Anlage, wobei das Hydrauliksystem (1) eine Mehrzahl von Hydraulikzylinderanordnungen (10), die durch Fluidleitungen mit einem Tank (13) und einer Pumpe (12) verbunden sind, die Fluid durch die Fluidleitungen fördert, und eine Mehrzahl von elektronisch betriebenen Ventilen (V_{Prop}, V_{Umgehung}, V1-V4) umfasst, die in den Fluidleitungen angeordnet sind, wobei die Fluidleitungen dadurch in Druckleitungen und Rückleitungen unterteilt sind, wobei das Verfahren Folgendes umfasst
- eine erste Stufe (S1), in der die Mehrzahl von elektronisch betriebenen Ventilen (V_{Prop}, V_{Umgehung}, V1-V4) derart gesteuert werden, dass Fluid aus dem Tank (13) durch ein Umgehungsventil (V_{Umgehung}) der Mehrzahl von elektronisch betriebenen Ventilen und direkt zurück zu dem Tank (13) umgewälzt wird, bis die Temperatur des Fluids in dem Tank (13) einen ersten Zwischenpegel (T_{Int_1}) erreicht hat; und
- eine zweite Stufe (S2), die einen ersten Schritt (S2.1), in dem die Mehrzahl von elektronisch betriebenen Ventilen (V_{Prop}, V_{Umgehung}, V1-V4) derart gesteuert werden, dass Fluid aus dem Tank (13) durch die entsprechenden Druckleitungen von zwei oder mehr Hydraulikzylinderanordnungen (10) des Hydrauliksystems (1) und zurück zu dem Tank (13) umgewälzt wird, bis die Temperatur des Fluids einen zweiten Zwischenpegel (T_{Int_2}) erreicht hat, und einen zweiten Schritt (S2.2), in dem die Mehrzahl von elektronisch betriebenen Ventilen (V_{Prop}, V_{Umgehung}, V1-V4) derart gesteuert wird, dass Fluid aus dem Tank (13) durch die entsprechenden Druckleitungen einer einzelnen Hydraulikzylinderanordnung (10) des Hydrauliksystems (1) und zurück zu dem Tank (13) umgewälzt wird, bis die Temperatur des Fluids einen gewünschten Betriebspegel (T_{Betr}) erreicht hat, umfasst.

2. Verfahren nach Anspruch 1, umfassend eine Anfangsstufe (S0), in der die Mehrzahl von elektronisch betriebenen Ventilen (V_{Prop}, V_{Umgehung}, V1-V4) derart gesteuert werden, dass Systemdruck aus einer Akkumulatoranordnung (11) abgelassen wird.

3. Verfahren nach Anspruch 2, umfassend eine abschließende Stufe (S3), in der die Mehrzahl von elektronisch betriebenen Ventilen (V_{Prop}, V_{Umgehung}, V1-V4) derart gesteuert werden, dass die Akkumulatoranordnung (11) mit erwärmtem Fluid gefüllt wird.

4. Verfahren nach einem der vorhergehenden Ansprüche, wobei die Mehrzahl von elektronisch betriebenen Ventilen (V_{Prop}, V_{Umgehung}, V1-V4) Proportionalventile (V_{Prop}) umfasst, die allen Hydraulikzylinderanordnungen (10) zugeordnet sind, wobei die zugeordneten Proportionalventile (V_{Prop}) aller Hydraulikzylinderanordnungen (10) während des ersten Schritts (S2.1) der zweiten Stufe (S2) derart gesteuert werden, dass Fluid aus dem Tank (13) durch die entsprechenden Druckleitungen und zurück zu dem Tank (13) umgewälzt wird, bis die Temperatur des Fluids den zweiten Zwischenpegel (T_{Int_2}) erreicht hat.

5. Verfahren nach Anspruch 4, wobei während des zweiten Schritts (S2.2) der zweiten Stufe (S2) das zugeordnete Proportionalventil (V_{Prop}) einer einzelnen Hydraulikzylinderanordnung (10) derart gesteuert wird, dass Fluid aus dem Tank (13) durch die entsprechende Druckleitung und zurück zu dem Tank (13) umgewälzt wird, bis die Temperatur des Fluids den gewünschten Betriebspegel (T_{Betr}) erreicht hat.

6. Hydrauliksystem (1), umfassend mindestens
- eine Mehrzahl von Hydraulikzylinderanordnungen (10), eine Akkumulatoranordnung (11) und einen Tank (13), der durch Fluidleitungen und eine Pumpe (12) verbunden ist, die Fluid durch die Fluidleitungen fördert;
- eine Mehrzahl von elektronisch betriebenen Ventilen (V_{Prop}, V_{Umgehung}, V1-V4), die in den Fluidleitungen angeordnet sind, wobei die Mehrzahl von elektronisch betriebenen Ventilen (V_{Prop}, V_{Umgehung}, V1-V4) ein Umgehungsventil (V_{Umgehung}) umfasst; und
- eine Steuerung, die dazu ausgelegt ist, das Verfahren nach den Ansprüchen 1 bis 5 auszuführen, um die Temperatur des Fluids von einer Mindestbetriebstemperatur (Tₖₐₗₜ) einer Anlage auf die gewünschte Betriebstemperatur (T_{Betr}) der Anlage anzuheben.

7. Hydrauliksystem nach Anspruch 6, umfassend eine Umgehungsschaltung (1B), wobei die Umgehungsschaltung (P_{Umgehung}) das Umgehungsventil (V_{Umgenung}), eine erste Fluidleitung zwischen dem Tank (13) und dem Umgehungsventil (V_{Umgenung}) und eine zweite Fluidleitung zwischen dem Umgehungsventil (V_{Umgenung}) und dem Tank (13) umfasst.

8. Hydrauliksystem nach Anspruch 6 oder Anspruch 7, umfassend eine Temperatursensoranordnung (14), die dazu ausgelegt ist, die Fluidtemperatur in dem Tank (13) zu messen.

9. Hydrauliksystem nach einem der Ansprüche 6 bis 8, ohne jegliche zusätzliche Heizeinrichtung in dem Tank (13).

10. Windkraftanlage, umfassend eine Mehrzahl von Rotorblättern und eine Rotorblattverstellanordnung, wobei die Verstellanordnung ein Hydrauliksystem (1) nach einem der Ansprüche 6 bis 9 umfasst.

11. Windkraftanlage nach Anspruch 10, wobei jede der Mehrzahl von Hydraulikzylinderanordnungen (10) einen oder mehrere Hydraulikzylinder (10) umfasst, der dazu angeordnet ist, eine Winkeldrehung eines jeweiligen Rotorblatts um seine Längsachse zu bewirken.

12. Windkraftanlage nach Anspruch 10 oder Anspruch 11, mit einer Mindestbetriebstemperatur (Tₖₐₗₜ) im Bereich von -30 °C.

13. Windkraftanlage nach Anspruch 12, wobei das Hydraulikfluid des Hydrauliksystems (1) einen Viskositätsindex von höchstens 160 aufweist.

14. Windkraftanlage nach Anspruch 13, wobei die Pumpe (12) gemäß der Viskosität des Hydraulikfluids bei der Mindestbetriebstemperatur (Tₖₐₗₜ) der Windkraftanlage konstruiert ist.

15. Computerprogrammprodukt, das ein Computerprogramm umfasst, das direkt in einen Speicher der Steuerung eines Hydrauliksystems nach einem der Ansprüche 6 bis 9 ladbar ist und das Programmelemente zum Durchführen von Schritten des Verfahrens nach einem der Ansprüche 1 bis 5 umfasst, wenn das Computerprogramm durch die Steuerung ausgeführt wird.

## Revendications

1. Procédé de fonctionnement d'un système hydraulique (1) d'une installation pour reprendre le fonctionnement à partir d'une température de fonctionnement minimale (T_{cold}) de l'installation, le système hydraulique (1) comprenant une pluralité d'agencements de vérins hydrauliques (10) reliés par des conduites de fluide à un réservoir (13) et à une pompe (12) qui transporte le fluide à travers les conduites de fluide et une pluralité de vannes à commande électronique (Vₚᵣₒₚ, V_{bypass}, V1
- V4) agencées dans les conduites de fluide, les conduites de fluide étant ainsi divisées en conduites de pression et conduites de retour, le procédé comprenant
- un premier étage (S1) dans lequel la pluralité de vannes à commande électronique (Vₚᵣₒₚ, V_{bypass}, V1 - V4) sont commandées pour faire circuler le fluide depuis le réservoir (13) à travers une vanne de dérivation (V_{bypass}) de la pluralité de vannes à commande électronique et le renvoyer directement au réservoir (13) jusqu'à ce que la température du fluide dans le réservoir (13) ait atteint un premier niveau intermédiaire (T_{int_1}) ; et
- un deuxième étage (S2) comprenant
une première étape (S2.1) dans laquelle la pluralité de vannes à commande électronique (Vₚᵣₒₚ, V_{bypass}, V1 - V4) sont commandées pour faire circuler le fluide depuis le réservoir (13) à travers les conduites de pression correspondantes de deux ou plus agencements de vérins hydrauliques (10) du système hydraulique (1) et le renvoyer au réservoir (13) jusqu'à ce que la température du fluide ait atteint un deuxième niveau intermédiaire (T_{int_2}), et
une deuxième étape (S2.2) dans laquelle la pluralité de vannes à commande électronique (Vₚᵣₒₚ, V_{bypass}, V1 - V4) sont commandées pour faire circuler le fluide depuis le réservoir (13) à travers les conduites de pression correspondantes d'un agencement de vérins hydrauliques unique (10) du système hydraulique (1) et le renvoyer au réservoir (13) jusqu'à ce que la température du fluide ait atteint un niveau de fonctionnement souhaité (Tₒₚ).

2. Procédé selon la revendication 1, comprenant un étage initial (S0) dans lequel la pluralité de vannes à commande électronique (Vₚᵣₒₚ, V_{bypass}, V1 - V4) sont commandées pour évacuer la pression du système d'un agencement d'accumulateur (11).

3. Procédé selon la revendication 2, comprenant un étage final (S3) dans lequel la pluralité de vannes à commande électronique (Vₚᵣₒₚ, V_{bypass}, V1 - V4) sont commandées pour remplir l'agencement d'accumulateur (11) avec le fluide chauffé.

4. Procédé selon l'une des revendications précédentes, dans lequel la pluralité de vannes à commande électronique (Vₚᵣₒₚ, V_{bypass}, V1 - V4) comprend des vannes proportionnelles (Vₚᵣₒₚ) dédiées à tous les agencements de vérins hydrauliques (10), dans lequel les vannes proportionnelles dédiées (Vₚᵣₒₚ) de tous les agencements de vérins hydrauliques (10) sont commandées pendant la première étape (S2.1) du deuxième étage (S2) pour faire circuler le fluide depuis le réservoir (13) à travers les conduites de pression correspondantes et le renvoyer au réservoir (13) jusqu'à ce que la température du fluide ait atteint le deuxième niveau intermédiaire (T_{int_2}).

5. Procédé selon la revendication 4, dans lequel, pendant la deuxième étape (S2.2) du deuxième étage (S2), la vanne proportionnelle dédiée (Vₚᵣₒₚ) d'un agencement de vérins hydrauliques unique (10) est commandée pour faire circuler le fluide depuis le réservoir (13) à travers la conduite de pression correspondante et le renvoyer au réservoir (13) jusqu'à ce que la température du fluide ait atteint le niveau de fonctionnement souhaité (Tₒₚ).

6. Système hydraulique (1) comprenant au moins
- une pluralité d'agencements de vérins hydrauliques (10), un agencement d'accumulateur (11) et un réservoir (13) reliés par des conduites de fluide, et une pompe (12) agencée pour transporter le fluide à travers les conduites de fluide ;
- une pluralité de vannes à commande électronique (Vₚᵣₒₚ, V_{bypass}, V1 - V4) agencées dans les conduites de fluide, la pluralité de vannes à commande électronique (Vₚᵣₒₚ, V_{bypass}, V1 - V4) comprenant une vanne de dérivation (V_{bypass}) ; et
- un dispositif de commande configuré pour exécuter le procédé des revendications 1 à 5 pour élever la température du fluide depuis une température de fonctionnement minimale (T_{cold}) d'une installation jusqu'à la température de fonctionnement souhaitée (Tₒₚ) de l'installation.

7. Système hydraulique selon la revendication 6, comprenant un circuit de dérivation (1B), lequel circuit de dérivation (P_{bypass}) comprend la vanne de dérivation (V_{bypass}), une première conduite de fluide entre le réservoir (13) et la vanne de dérivation (V_{bypass}), et une deuxième conduite de fluide entre la vanne de dérivation (V_{bypass}) et le réservoir (13).

8. Système hydraulique selon la revendication 6 ou la revendication 7, comprenant un agencement de capteur de température (14) configuré pour mesurer la température de fluide dans le réservoir (13).

9. Système hydraulique selon l'une des revendications 6 à 8, sans aucun appareil de chauffage supplémentaire dans le réservoir (13).

10. Éolienne comprenant une pluralité de pales de rotor et un agencement de réglage de pas de pale de rotor, lequel agencement de réglage de pas comprend un système hydraulique (1) selon l'une des revendications 6 à 9.

11. Éolienne selon la revendication 10, dans laquelle chacun de la pluralité d'agencements de vérins hydrauliques (10) comprend un ou plusieurs vérins hydrauliques (10) qui sont agencés pour effectuer une rotation angulaire d'une pale de rotor respective autour de son axe longitudinal.

12. Éolienne selon la revendication 10 ou la revendication 11, avec une température de fonctionnement minimale (T_{cold}) de l'ordre de -30°C.

13. Éolienne selon la revendication 12, dans laquelle le fluide hydraulique du système hydraulique (1) présente un indice de viscosité d'au plus 160.

14. Éolienne selon la revendication 13, dans laquelle la pompe (12) est construite en fonction de la viscosité du fluide hydraulique à la température de fonctionnement minimale (T_{cold}) de l'éolienne.

15. Produit de programme informatique comprenant un programme informatique qui est directement chargeable dans une mémoire du dispositif de commande d'un système hydraulique selon l'une des revendications 6 à 9 et qui comprend des éléments de programme pour effectuer des étapes du procédé selon l'une des revendications 1 à 5 lorsque le programme informatique est exécuté par le dispositif de commande.
